# EUROPÄISCHE PATENTSCHRIFT

(11) **EP 4 143 521 B1**
(45) Veröffentlichungstag und Bekanntmachung des Hinweises auf die Patenterteilung: **04.06.2025**
(21) Anmeldenummer: 22700383.7
(22) Anmeldetag: 11.01.2022
(51) Int. Cl.: G01J 5/02, F41G 11/00, G01J 5/08, G02B 27/01, H04N 5/33, G02B 23/12

(54) **ZIEL- UND/ODER BEOBACHTUNGSEINRICHTUNG MIT BILDÜBERLAGERUNG**
TARGET AND/OR OBSERVATION DEVICE WITH IMAGE OVERLAY
DISPOSITIF DE VISÉE ET/OU D'OBSERVATION AVEC SUPERPOSITION D'IMAGES

(30) Priorität: 02.02.2021 DE 102021102347; 23.03.2021 DE 102021107156
(43) Veröffentlichungstag der Anmeldung: 08.03.2023
(73) Patentinhaber: VECTED GMBH, 90768 Fürth (DE)
(72) Erfinder: PFAB, Wolfgang, 90402 Nürnberg (DE)
(74) Vertreter: Hoefer & Partner Patentanwälte mbB
(86) Internationale Anmeldenummer: PCT/EP2022/050408
(87) Internationale Veröffentlichungsnummer: WO 2022/167174

(56) Entgegenhaltungen:
- EP-A1- 2 938 061
- WO-A1-2014/159758
- US-A1- 2007 235 634
- US-A1- 2009 050 806
- US-A1- 2018 198 960

## Beschreibung

Die Erfindung betrifft eine Ziel- und/oder Beobachtungseinrichtung mit Bildüberlagerung.

Entsprechende Ziel- oder Beobachtungseinrichtungen, die nachfolgend auch kurz als Einrichtungen bezeichnet werden, sind allgemein bekannt. Sie weisen einen ersten Kanal mit einer ersten Optik auf, die eine erste optische Achse definiert und der ein erster Bildsensor zur Erfassung eines ersten Bildes zugeordnet ist. Ferner weisen die bekannten Einrichtungen einen zweiten Kanal mit einer zweiten Optik auf, die eine zweite optische Achse definiert und der ein zweiter Bildsensor zur Erfassung eines zweiten Bildes zugeordnet sind. Dabei sind die erste optische Achse und die zweite optische Achse senkrecht zur Achsrichtung zueinander beabstandet angeordnet. Wenigstens einer Optik ist eine motorische Fokussiereinrichtung zugeordnet.

Durch den Abstand der optischen Achsen senkrecht zu deren Achsrichtung tritt bei den bekannten Einrichtungen Parallaxe auf, die die Benutzung der Einrichtung insbesondere dann beeinträchtigt, wenn es sich bei der Einrichtung um eine Zieleinrichtung, beispielsweise für eine Handfeuerwaffe, handelt.

Es ist beispielsweise von Messsucherkameras, bei denen zwischen einem optischen Sucher und der Aufnahmeoptik Parallaxe auftritt, bekannt, einen Parallaxenausgleich auszuführen, indem in Abhängigkeit von der Fokusposition der Aufnahmeoptik ein Sucherrahmen im optischen Sucher verschoben wird.

Durch US 7 307 793 B2 ist eine Nachtsichteinrichtung bekannt, bei der mittels eines Sensors die Fokusposition einer mechanisch fokussierbaren Optik erfasst und in Abhängigkeit von der erfassten Fokusposition ein Parallaxenausgleich durchgeführt wird.

Eine ähnliche Einrichtung ist auch durch US 8 072 469 B2 bekannt.

Durch EP 2 938 061 A1 ist eine Ziel- und/oder Beobachtungseinrichtung mit den Merkmalen des Oberbegriffs des Anspruchs 1 bekannt.

Eine ähnliche Ziel- und/oder Beobachtungseinrichtung ist auch durch WO 2014/159758 A1 bekannt.

US 2007/235634 A1 offenbart ein Nachtsichtgerät mit Bildüberlagerung.

Der Erfindung liegt die Aufgabe zugrunde, eine Beobachtungs- und/oder Zieleinrichtung mit Bildüberlagerung anzugeben, die in Hinblick auf einen Parallaxenausgleich verbessert ist.

Diese Aufgabe wird durch die im Anspruch 1 angegebene Erfindung gelöst.

Die Erfindung geht von einer Beobachtungs- und/oder Zieleinrichtung mit einem ersten Kanal und einem zweiten Kanal aus, wobei wenigstens einer Optik eine motorische Fokussiereinrichtung zugeordnet ist. Zur Ansteuerung der motorischen Fokussiereinrichtung ist eine Steuerungseinrichtung vorgesehen.

Zur Erzeugung eines Überlagerungsbildes ist eine Bildverarbeitungseinrichtung vorgesehen, die mit den Bildsensoren in Signalübertragungsverbindung steht und derart ausgebildet und programmiert ist, dass auf einer Anzeigeeinrichtung ein Überlagerungsbild angezeigt wird, in dem das zweite Bild dem ersten Bild überlagert ist.

Erfindungsgemäß steht die Steuerungseinrichtung derart mit der Bildverarbeitungseinrichtung in Datenübertragungsverbindung, dass der Bildverarbeitungseinrichtung wenigstens ein Fokuspositionssignal zugeführt wird, das die Fokusposition wenigstens einer Optik repräsentiert, wobei die Bildverarbeitungseinrichtung derart ausgebildet und programmiert ist, dass die Bildüberlagerung des zweiten Bildes mit dem ersten Bild in Abhängigkeit von dem Fokuspositionssignal beeinflusst wird zur Durchführung eines Parallaxenausgleichs.

Erfindungsgemäß wird die Fokusposition wenigstens einer Optik aus dem entsprechenden Steuerungssignal der Steuerungseinrichtung abgeleitet und zur Ermittlung der für diese Fokusposition der Optik und damit für diese eingestellte Entfernung geltenden Parallaxe herangezogen. Auf diese Weise erübrigen sich Sensoren zur Erfassung der Fokusposition, sodass der Parallaxenausgleich auf besonders einfache Weise ausgeführt werden kann.

Die Erfindung sieht vor, dass wenigstens einer Optik eine Temperaturmesseinrichtung zugeordnet ist, die mit der Bildverarbeitungseinrichtung in Datenübertragungsverbindung steht, wobei die Bildverarbeitungseinrichtung mit einem Speicher in Datenübertragungsverbindung steht, in dem eine Umsetzungstabelle gespeichert ist, in der zur Ermittlung eines temperaturabhängigen Parallaxenverlaufs die Temperatur wenigstens einer Optik jeweils in einen zugehörigen Wert der Parallaxe umgesetzt ist oder die Bildverarbeitungseinrichtung derart ausgebildet und programmiert ist, dass die gemessene Temperatur entsprechend einem vorgegebenen Algorithmus in einen zugehörigen Wert der Parallaxe umgerechnet wird, wobei die Bildverarbeitungseinrichtung derart ausgebildet und programmiert ist, dass die Bildüberlagerung zur Durchführung eines Parallaxenausgleichs in Abhängigkeit von dem zu der jeweiligen Temperatur gehörigen Wert der Parallaxe beeinflusst wird. Bei dieser Ausführungsform ist in einer Umsetzungstabelle (Lookup-Table) festgehalten, wie sich die Parallaxe bei Temperaturänderungen ändert. Durch Messung der Temperatur der Optik kann somit festgestellt werden, wie sich die Parallaxe aufgrund der Änderung der Temperatur gegenüber einer Referenztemperatur geändert hat. Die temperaturabhängige Änderung der Parallaxe kann dementsprechend bei dem Parallaxenausgleich in der Bildverarbeitungseinrichtung berücksichtigt werden. Ein besonderer Vorteil dieser Ausführungsform besteht darin, dass sich in Bezug auf den Parallaxenausgleich eine athermale Korrektion der verwendeten Optiken erübrigt. In der erfindungsgemäßen Einrichtung können damit weniger aufwändige Optiken verwendet werden, bei deren Design auf eine athermale Korrektion verzichtet wird. Erfindungsgemäß wird vielmehr in der Bildbearbeitungseinrichtung eine digitale Athermalisierung durchgeführt.

Erfindungsgemäß können zur Umsetzung einer Fokusposition bzw. einer Temperatur wenigstens einer Optik in einen zugehörigen Wert der Parallaxe Umsetzungstabellen verwendet werden. Alternativ kann der jeweilige Wert der Parallaxe auch mittels einer zuvor aufgestellten und vorgegebenen Formel errechnet werden.

Entsprechend den jeweiligen Anforderungen und Gegebenheiten können die beiden Kanäle zur Erfassung von Strahlung in innerhalb weiter Grenzen variierenden Spektralbereichen ausgebildet sein. Eine vorteilhafte Weiterbildung der Erfindung sieht insoweit vor, dass der erste Kanal zur Erfassung von Strahlung im sichtbaren Wellenlängenbereich und der zweite Kanal zur Erfassung von Infrarotstrahlung ausgebildet ist, derart, dass einem von dem ersten Kanal erzeugten natürlichen Bild ein von dem zweiten Kanal erzeugtes Wärmebild überlagert wird.

Eine andere vorteilhafte Weiterbildung der Erfindung sieht vor, dass die Bildverarbeitungseinrichtung zur Einblendung einer Zielmarke in das Überlagerungsbild ausgebildet und programmiert ist.

Eine andere außerordentlich vorteilhafte Weiterbildung der Erfindung sieht vor, dass die Bildverarbeitungseinrichtung derart ausgebildet und programmiert ist, dass ermittelt wird, ob sich die Zielmarke über einem fokussierten Objekt befindet, wobei die Bildverarbeitungseinrichtung in Abhängigkeit von dem Ergebnis der Ermittlung vorzugsweise ein Merkmal der Zielmarke verändert. Diese Ausführungsform stellt eine weitere Funktionalität bereit, indem festgestellt wird, ob die Zielmarke sich über einem fokussierten Objekt befindet und dementsprechend der Parallaxenausgleich für die eingestellte Entfernung ausgeführt ist. Falls festgestellt wird, dass sich die Zielmarke über einem nicht fokussierten Objekt befindet, kann beispielsweise die Farbe der Zielmarke verändert werden, um den Benutzer anzuzeigen, dass in Bezug auf das mit der Zielmarke anvisierte Objekt ein Parallaxenausgleich nicht oder nicht vollständig vorgenommen wurde und damit die Bildüberlagerung unter Umständen mit einer Parallaxe behaftet ist. Auf diese Weise ist die Zielgenauigkeit einer erfindungsgemäßen Zieleinrichtung verbessert. Anstelle der Änderung der Farbe oder eines anderen Merkmals der eingeblendeten Zielmarke kann bei dieser Ausführungsform das Ergebnis auch auf andere Weise angezeigt werden, beispielsweise durch ein akustisches oder anderes optisches Signal.

Eine andere vorteilhafte Weiterbildung der Erfindung sieht vor, dass die Steuerungseinrichtung derart ausgebildet und programmiert ist, dass die Fokussierung der zweiten Optik einer Fokussierung der ersten Optik nachgeführt wird.

Die Ausgestaltung der Anzeigeeinrichtung, auf der das Überlagerungsbild angezeigt wird, ist entsprechend den jeweiligen Anforderungen innerhalb weiter Grenzen wählbar. Eine vorteilhafte Weiterbildung der Erfindung sieht insoweit vor, dass die Anzeigeeinrichtung ein Okular umfasst.

Grundsätzlich kann bei der vorgenannten Ausführungsform die Ziel- und/oder Beobachtungseinrichtung monokular ausgebildet sein. Eine vorteilhafte Weiterbildung der Erfindung sieht vor, dass die Ziel- und/oder Beobachtungseinrichtung binokular ausgebildet ist.

Grundsätzlich kann erfindungsgemäß einer Optik eine motorische Fokussiereinrichtung zugeordnet sein, während die andere Optik als Fixfokus-Optik ausgebildet ist. Eine vorteilhafte Weiterbildung der Erfindung sieht vor, dass die erste Optik eine erste Fokussiereinrichtung und die zweite Optik eine zweite Fokussiereinrichtung umfasst.

Eine andere vorteilhafte Weiterbildung der Erfindung sieht vor, dass die Ziel- und/oder Beobachtungseinrichtung als Reflexvisier ausgebildet ist.

Die optischen Achsen der ersten Optik und der zweiten Optik können zueinander parallel verlaufend angeordnet oder so ausgerichtet sein, dass sie sich in einer vorbestimmten Entfernung vor der Einrichtung, beispielsweise bei 100 m, kreuzen.

Die Erfindung wird nachfolgend anhand eines Ausführungsbeispiels unter Bezugnahme auf die beigefügte, stark schematisierte und teilweise blockschaltbildartige Zeichnung näher erläutert.

Es zeigt:
- Fig. 1: schematisch und blockschaltbildartig ein Ausführungsbeispiel einer erfindungsgemäßen Einrichtung,
- Fig. 2: eine Schemazeichnung der Einrichtung gemäß Fig. 1 bei der Erfassung einer Szenerie mit tiefengestaffelten Objektebenen,
- Fig. 3A bis 3D: eine Schemazeichnung zur Verdeutlichung der Funktionsweise der Erfindung und
- Fig. 4A bis 4D: eine weitere Schemazeichnung zur weiteren Verdeutlichung der Funktionsweise der Erfindung.

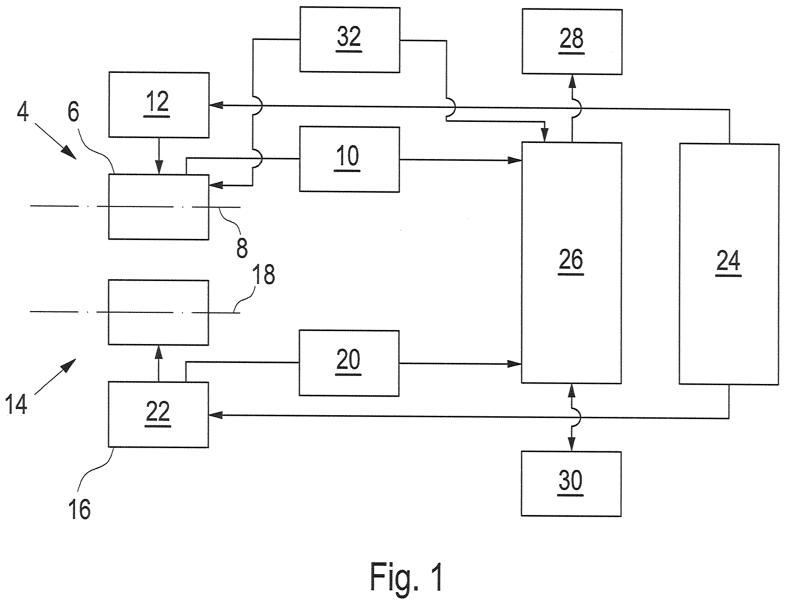

In Fig. 1 ist stark schematisiert und blockschaltbildartig ein Ausführungsbeispiel einer erfindungsgemäßen Ziel- und/oder Beobachtungseinrichtung 2 mit Bildüberlagerung dargestellt, die bei diesem Ausführungsbeispiel als kombinierte Ziel- und Beobachtungseinrichtung ausgebildet ist und nachfolgend auch kurz als Einrichtung 2 bezeichnet wird.

Die Einrichtung 2 weist einen ersten Kanal 4 mit einer ersten Optik 6 auf, die eine erste optische Achse 8 definiert und der ein erster Bildsensor 10 zur Erfassung eines ersten Bildes und eine erste motorische Fokussiereinrichtung 12 zugeordnet sind.

Die Einrichtung 2 weist ferner einen zweiten Kanal 14 mit einer zweiten Optik 16 auf, die eine zweite optische Achse 18 definiert und der ein zweiter Bildsensor 20 zur Erfassung eines zweiten Bildes und bei diesem Ausführungsbeispiel eine zweite motorische Fokussiereinrichtung 22 zugeordnet sind.

Bei dem dargestellten Ausführungsbeispiel ist der erste Kanal 4 zur Erfassung von Strahlung im sichtbaren Wellenlängenbereich und der zweite Kanal 14 zur Erfassung von Infrarotstrahlung ausgebildet, derart, dass einem von dem ersten Kanal 4 erzeugten natürlichen Bild ein von dem zweiten Kanal 14 erzeugtes Wärmebild überlagert wird.

Zur Ansteuerung der motorischen Fokussiereinrichtungen 12, 22 ist eine Steuerungseinrichtung 24 vorgesehen. Der Aufbau entsprechender motorischer Fokussiereinrichtungen, die auch als "Focus-by-wire"-Einrichtungen bezeichnet werden und bei denen motorisch optische Elemente einer Optik zur Fokussierung relativ zueinander verschoben werden, ist dem Fachmann allgemein bekannt und wird daher hier nicht näher erläutert.

Bauartbedingt sind die erste optische Achse 8 und die zweite optische Achse 18 senkrecht zur Achsrichtung beabstandet und bei diesem Ausführungsbeispiel zueinander parallel angeordnet.

Die Einrichtung 2 weist ferner eine Bildverarbeitungseinrichtung 26 auf, die mit den Bildsensoren 10, 20 in Signalübertragungsverbindung steht und derart ausgebildet und programmiert ist, dass auf einer Anzeigeeinrichtung 28 ein Überlagerungsbild angezeigt wird, in dem das zweite Bild dem ersten Bild überlagert ist. Bei der Anzeigeeinrichtung 28 kann es sich beispielsweise um ein Display handeln, das mittels eines Okulars (entsprechend den jeweiligen Anforderungen und Gegebenheiten monokular oder binokular) betrachtet wird.

Die Bildverarbeitungseinrichtung 26 ist zur Einblendung einer Zielmarke in das Überlagerungsbild ausgebildet und programmiert.

Aufbau und Funktionsweise entsprechender Ziel- und/oder oder Beobachtungseinrichtungen sind dem Fachmann allgemein bekannt und werden daher hier nur insoweit näher beschrieben, wie dies zur Erläuterung der Erfindung erforderlich ist.

Die Steuerungseinrichtung 24 und die Bildverarbeitungseinrichtung 26 können entsprechend den jeweiligen Anforderungen durch eine Kombination von Hardware in Form elektronischer Bauelemente und Software realisiert sein.

Erfindungsgemäß steht die Steuerungseinrichtung 24 derart mit der Bildverarbeitungseinrichtung 26 in Datenübertragungsverbindung, dass der Bildverarbeitungseinrichtung 26 wenigstens ein Fokuspositionssignal zugeführt wird, das die Fokusposition wenigstens einer Optik 6 bzw. 16 repräsentiert. Die Bildverarbeitungseinrichtung 26 ist derart ausgebildet und programmiert, dass die Bildüberlagerung des zweiten Bildes mit dem ersten Bild in Abhängigkeit von dem Fokuspositionssignal beeinflusst wird zur Durchführung eines Parallaxenausgleichs.

Bei dem dargestellten Ausführungsbeispiel steht die Bildverarbeitungseinrichtung 26 mit einem Speicher 30 in Datenübertragungsverbindung, in dem eine Umsetzungstabelle (Lookup-Table) gespeichert ist, in der die Fokusposition wenigstens einer Optik 6 bzw. 16 in einen zugehörigen Wert der Parallaxe umgesetzt ist. Die Bildverarbeitungseinrichtung 26 ist derart ausgebildet und programmiert, dass die Bildüberlagerung zur Durchführung eines Parallaxenausgleichs in Abhängigkeit von dem zu der jeweiligen Fokusposition gehörigen Wert der Parallaxe beeinflusst wird.

Bei dem dargestellten Ausführungsbeispiel wird die erste Optik 6 von einem Benutzer der Einrichtung 2 durch Betätigung der ersten motorischen Fokussiereinrichtung 12 fokussiert und die entsprechende Fokusposition (gesteuert durch die Steuerungseinrichtung 24) bei der zweiten Optik 16 nachgeführt.

Die Funktionsweise der Erfindung ist wie folgt:
Bei Benutzung der Einrichtung 2 stellt der Benutzer das von der ersten Optik 6 erzeugte natürliche Bild durch Betätigung der ersten motorischen Fokussiereinrichtung 12 auf ein Objekt in der von der Einrichtung 2 erfassten Szenerie scharf. Die Fokussierung der zweiten Optik 16 wird entsprechend nachgeführt, und die sich ergebende Fokusposition wird zu der Bildverarbeitungseinrichtung 26 übertragen.

In der Bildverarbeitungseinrichtung 26 wird durch Zugriff auf die in dem Speicher 30 gespeicherte Umsetzungstabelle festgestellt, wie groß die Parallaxe bei der entsprechenden Entfernung ist. Die Bildüberlagerung des von dem ersten Kanal 4 bereitgestellten natürlichen Bildes mit dem von dem zweiten Kanal 14 bereitgestellten Wärmebild wird durch die Bildverarbeitungseinrichtung 26 so gesteuert, dass das resultierende Überlagerungsbild für die jeweilige Fokusposition der Optiken 6, 16 und damit für die Objektebene, auf die die Optiken 6, 16 fokussiert sind, parallaxenkorrigiert ist. Auf diese Weise ist die Darstellung des Überlagerungsbildes verbessert, was insbesondere dann von Bedeutung ist, wenn die Einrichtung 2 als Zieleinrichtung, beispielsweise für eine Handfeuerwaffe, verwendet wird.

Zur weiteren Verbesserung des erfindungsgemäß durchgeführten Parallaxenausgleichs ist wenigstens einer Optik 6 bzw. 16 eine Temperaturmesseinrichtung 32 zugeordnet. Die Bildverarbeitungseinrichtung steht mit der Temperaturmesseinrichtung 32 und dem Speicher 30 in Datenübertragungsverbindung, in dem eine Umsetzungstabelle gespeichert ist, in der zur Ermittlung eines temperaturabhängigen Parallaxenverlaufs eine Temperatur der Optiken 6, 16 in einen zugehörigen Wert der Parallaxe umgesetzt ist. Die Bildverarbeitungseinrichtung 26 ist derart ausgebildet und programmiert, dass die Bildüberlagerung zur Durchführung eines Parallaxenausgleichs in Abhängigkeit von dem zu der jeweiligen Temperatur gehörigen Änderungswert der Parallaxe beeinflusst wird.

Auf diese Weise kann eine temperaturabhängige Änderung der Parallaxe bei der Generierung des Überlagerungsbildes in Abhängigkeit von der festgestellten Temperatur berücksichtigt werden, sodass die Genauigkeit des Parallaxenausgleichs weiter verbessert ist.

Ein besonderer Vorteil dieser Ausführungsform besteht darin, dass beim Design der Optiken 6, 16 auf eine athermale Korrektion verzichtet werden kann, ohne dass dies negative Auswirkungen auf die Genauigkeit des Parallaxenausgleichs hat. Dementsprechend können wesentlich einfachere und kostengünstigere Optiken verwendet werden. Die im Sinne eines möglichst genauen Parallaxenausgleichs erforderliche bzw. wünschenswerte Athermalisierung der Optiken 6, 16 wird erfindungsgemäß vielmehr digital ausgeführt.

Mittels der in das Überlagerungsbild eingeblendeten Zielmarke kann in der von der Einrichtung 2 erfassten und durch das Überlagerungsbild dargestellten Szenerie ein Objekt anvisiert werden, wenn die Einrichtung 2 beispielsweise als Zieleinrichtung für eine Handfeuerwaffe verwendet wird.

Bei dem dargestellten Ausführungsbeispiel ist die Bildverarbeitungseinrichtung derart ausgebildet und programmiert, dass ermittelt wird, ob sich die Zielmarke über einem fokussierten Objekt befindet, wobei die Bildverarbeitungseinrichtung in Abhängigkeit von dem Ergebnis der Ermittlung ein Merkmal der Zielmarke verändert. Wird beispielsweise bei der Ermittlung festgestellt, ob sich die Zielmarke über einem fokussierten Objekt befindet und das Überlagerungsbild damit in Bezug auf die Objektebene, in der sich das Objekt befindet, parallaxenkorrigiert ist, so kann die Farbe einer standardmäßig beispielsweise in Rot dargestellten Zielmarke in Grün geändert werden. Umgekehrt kann beispielsweise die Farbe einer standardmäßig in Grün dargestellten Zielmarke in Rot geändert werden, wenn sich die Zielmarke über einem nicht fokussierten Objekt in dem Überlagerungsbild befindet, und demzufolge in Bezug auf die Objektebene, in der sich das Objekt befindet, das Überlagerungsbild nicht parallaxenkorrigiert ist. Auf diese Weise ist die Zielgenauigkeit beim Anvisieren eines Objekts verbessert.

Dem Benutzer der Einrichtung 2 kann jedoch auch auf beliebige andere Weise signalisiert werden, ob sich die Zielmarke über einem fokussierten Objekt befindet, beispielsweise durch einen anderes optisches oder ein akustisches Signal.

Entsprechend den jeweiligen Anforderungen und dem jeweiligen Verwendungszweck kann die erfindungsgemäße Einrichtung 2 auf unterschiedliche Weise ausgestaltet sein. Beispielsweise und insbesondere kann die erfindungsgemäße Einrichtung als Reflexvisier ausgebildet sein.

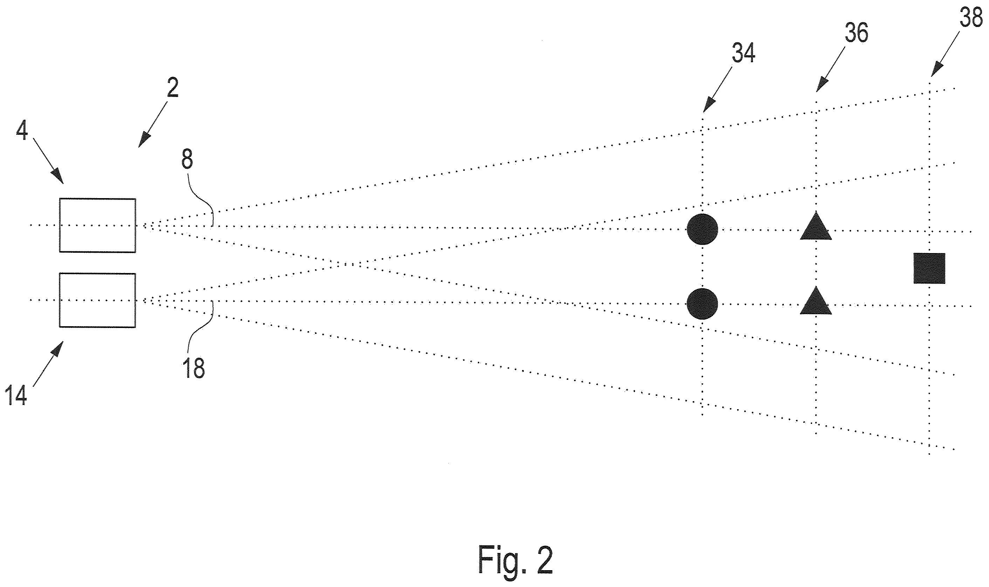

Fig. 2 zeigt in einer schematischen Darstellung die Kanäle 4, 14 der Einrichtung 2, wobei die Einrichtung 2 eine Szenerie erfasst, die tiefengestaffelt eine erste Objektebene 34, eine zweite Objektebene 36 und eine dritte Objektebene 38 umfasst.

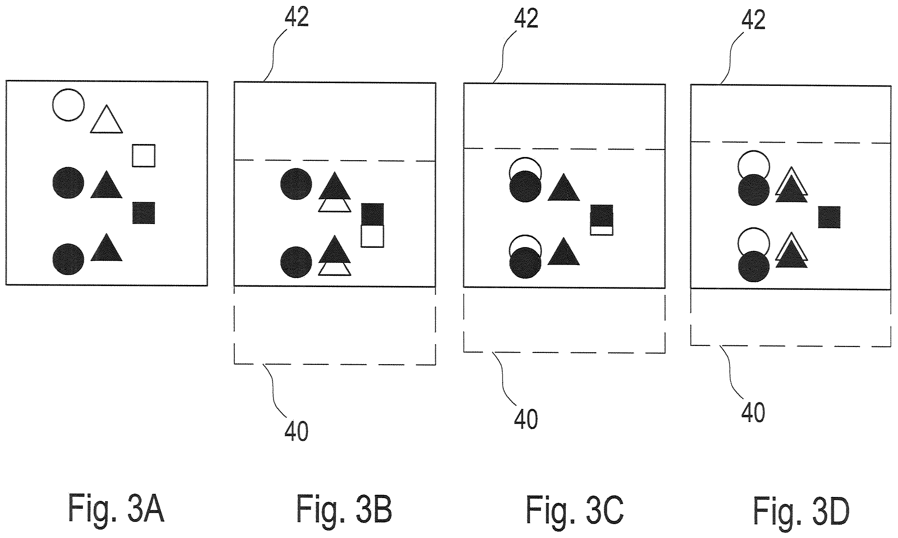

Fig. 3A bis Fig. 3D zeigen verschiedene Konstellationen eines Parallaxenausgleichs.

Fig. 3A zeigt eine Konstellation ohne Parallaxenausgleich, bei der aufgrund der Parallaxe zwischen den Kanälen 4, 14 die von den Kanälen 4, 14 aufgenommenen Bilder der Objektebenen 34, 36 und 38 parallaxenbehaftet überlagert sind.

Fig. 3B zeigt eine Konstellation, in der die Optiken 6, 16 auf die Objektebene 34 fokussiert sind und dementsprechend der Parallaxenausgleich für die Objektebene 34 ausgeführt ist, indem ein von dem zweiten Kanal 14 generiertes Bild (in Fig. 3 durch einen Rahmen 40 symbolisiert) gegenüber einem von dem ersten Kanal 4 generierten Bild (in Fig. 3 durch einen Rahmen 42 symbolisiert), verschoben ist. Für die in der Objektebene 34 liegenden Objekte ist das durch die Bildverarbeitungseinrichtung 26 generierte Überlagerungsbild parallaxenkorrigiert.

Fig. 3C und Fig. 3D zeigen Konstellationen, in denen die Optiken 6, 16 auf die Objektebene 36 bzw. 38 fokussiert sind und dementsprechend das Überlagerungsbild für die jeweilige Objektebene parallaxenkorrigiert ist. Es ist ersichtlich, dass ein Parallaxenausgleich in Bezug auf unterschiedliche Objektebenen eine unterschiedliche Verschiebung der Bilder 40, 42 relativ zueinander erfordert.

Es ist ferner ersichtlich, dass entsprechend den Gesetzen der Optik ein gleichzeitiger Parallaxenausgleich für sämtliche Objektebenen 34, 36 und 38 nicht möglich ist. Erfindungsgemäß wird der Parallaxenausgleich für diejenige Objektebene ausgeführt, auf die die Optiken 6, 16 fokussiert sind.

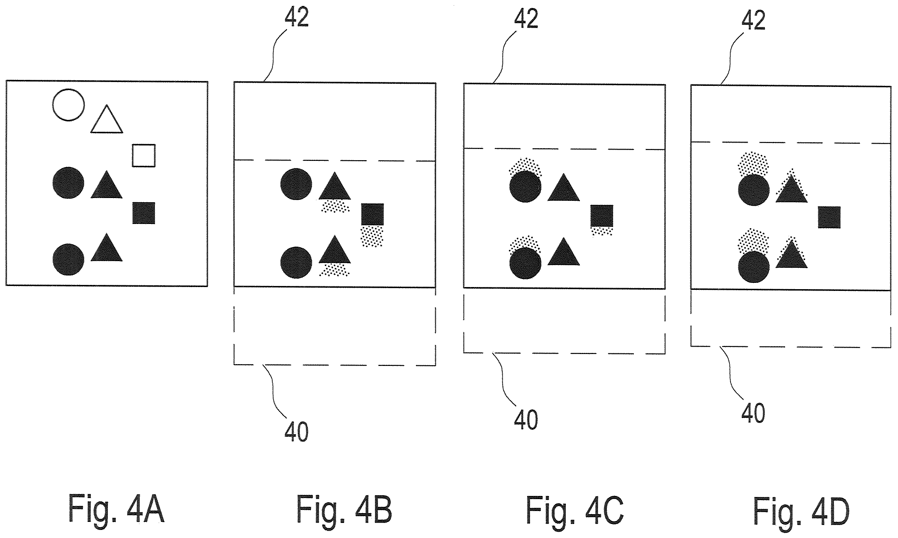

Fig. 4A bis Fig. 4D entsprechen Fig. 3A bis Fig. 3D, wobei zeichnerisch eine Unschärfe angedeutet ist, die sich bei der Generierung des Bildes des zweiten Kanals 14 ergibt, wenn die zweite Optik eine hochgeöffnete Optik mit entsprechend geringer Schärfentiefe ist. Referenz für die Scharfstellung und das Anvisieren eines Objekts mittels der Einrichtung 2 ist das von dem ersten Kanal 4 erzeugte Bild.

## Patentansprüche

1. Ziel- und/oder Beobachtungseinrichtung (2) mit Bildüberlagerung,
mit einem ersten Kanal (4), der eine erste Optik (6), die eine erste optische Achse (8) definiert, und einen ersten Bildsensor (10) zur Erfassung eines ersten Bildes umfasst,
mit einem zweiten Kanal (14), der eine zweite Optik (16), die eine zweite optische Achse (18) definiert, und einen zweiten Bildsensor (20) zur Erfassung eines zweiten Bildes umfasst,
wobei wenigstens eine Optik (6 bzw. 16) eine motorische Fokussiereinrichtung (12 bzw. 22) aufweist,
mit einer Steuerungseinrichtung (24) zur Ansteuerung der motorischen Fokussiereinrichtung (12 bzw.22),
wobei die erste optische Achse (8) und die zweite optische Achse (18) senkrecht zur Achsrichtung zueinander beabstandet angeordnet sind,
mit einer Bildverarbeitungseinrichtung (26), die mit den Bildsensoren (10, 20) in Signalübertragungsverbindung steht und derart ausgebildet und programmiert ist, dass auf einer Anzeigeeinrichtung (28) ein Überlagerungsbild angezeigt wird, in dem das zweite Bild dem ersten Bild überlagert ist,
wobei die Steuerungseinrichtung (24) derart mit der Bildverarbeitungseinrichtung (26) in Datenübertragungsverbindung steht, dass der Bildverarbeitungseinrichtung (26) wenigstens ein Fokuspositionssignal zugeführt wird, das die Fokusposition wenigstens einer Optik (6, 16) repräsentiert,
wobei die Bildverarbeitungseinrichtung (26) derart ausgebildet und programmiert ist, dass die Bildüberlagerung des zweiten Bildes mit dem ersten Bild in Abhängigkeit von dem Fokuspositionssignal beeinflusst wird zur Durchführung eines Parallaxenausgleichs,
**dadurch gekennzeichnet,**
**dass** die Einrichtung (2) wenigstens eine Temperaturmesseinrichtung (32) aufweist, die wenigstens einer Optik (6, 16) zugeordnet ist und mit der Bildverarbeitungseinrichtung (26) in Datenübertragungsverbindung steht, wobei die Bildverarbeitungseinrichtung (26) mit einem Speicher (30) in Datenübertragungsverbindung steht, in dem eine Umsetzungstabelle gespeichert ist, in der zur Ermittlung eines temperaturabhängigen Parallaxenverlaufs die jeweilige Temperatur wenigstens einer Optik (6, 16) in einen zugehörigen Wert der Parallaxe umgesetzt ist oder die Bildverarbeitungseinrichtung (26) derart ausgebildet und programmiert ist, dass die gemessene Temperatur entsprechend einem vorgegebenen Algorithmus in einen zugehörigen Wert der Parallaxe umgerechnet wird, wobei die Bildverarbeitungseinrichtung (26) derart ausgebildet und programmiert ist, dass die Bildüberlagerung zur Durchführung eines Parallaxenausgleichs in Abhängigkeit von dem zu der jeweiligen Temperatur gehörigen Wert der Parallaxe beeinflusst wird.

2. Ziel- und/oder Beobachtungseinrichtung nach Anspruch 1, **dadurch gekennzeichnet, dass** der erste Kanal (4) zur Erfassung von Strahlung im sichtbaren Wellenlängenbereich und der zweite optische Kanal (14) zur Erfassung von Infrarotstrahlung ausgebildet ist, derart, dass einem von dem ersten Kanal (4) erzeugten natürlichen Bild ein von dem zweiten Kanal (14) erzeugtes Wärmebild überlagert wird.

3. Ziel- und/oder Beobachtungseinrichtung nach Anspruch 1 oder 2, **dadurch gekennzeichnet, dass** die Bildverarbeitungseinrichtung (26) zur Einblendung einer Zielmarke in das Überlagerungsbild ausgebildet und programmiert ist.

4. Ziel- und/oder Beobachtungseinrichtung nach einem der vorhergehenden Ansprüche, **dadurch gekennzeichnet, dass** die Bildverarbeitungseinrichtung (26) derart ausgebildet und programmiert ist, dass ermittelt wird, ob sich die Zielmarke über einem fokussierten Objekt befindet, wobei die Bildverarbeitungseinrichtung (26) in Abhängigkeit von dem Ergebnis der Ermittlung vorzugsweise wenigstens ein Merkmal der Zielmarke verändert.

5. Ziel- und/oder Beobachtungseinrichtung nach einem der vorhergehenden Ansprüche, **dadurch gekennzeichnet, dass** die Steuerungseinrichtung (24) derart ausgebildet und programmiert ist, dass die Fokussierung der zweiten Optik (16) einer Fokussierung der ersten Optik (6) nachgeführt wird.

6. Ziel- und/oder Beobachtungseinrichtung nach einem der vorhergehenden Ansprüche, **dadurch gekennzeichnet, dass** die Anzeigeeinrichtung (28) ein Okular umfasst.

7. Ziel- und/oder Beobachtungseinrichtung nach einem der vorhergehenden Ansprüche, **dadurch gekennzeichnet, dass** die Ziel- und/oder Beobachtungseinrichtung binokular ausgebildet ist.

8. Ziel- und/oder Beobachtungseinrichtung nach einem der vorhergehenden Ansprüche, **dadurch gekennzeichnet, dass** die erste Optik (6) eine erste Fokussiereinrichtung (12) und die zweite Optik (16) eine zweite Fokussiereinrichtung (22) umfasst.

9. Ziel- und/oder Beobachtungseinrichtung nach einem der vorhergehenden Ansprüche, wobei die Ziel- und/oder Beobachtungseinrichtung (2) als Reflexvisier ausgebildet ist.

## Claims

1. Targeting and/or observation device (2) with image superimposition,
with a first channel (4), which comprises a first optical system (6), which defines a first optical axis (8), and a first image sensor (10) for capturing a first image,
with a second channel (14), which comprises a second optical system (16), which defines a second optical axis (18), and a second image sensor (20) for capturing a second image,
wherein at least one optical system (6 or 16) has a motorized focusing device (12 or 22),
with a control device (24) for controlling the motorized focusing device (12 or 22),
wherein the first optical axis (8) and the second optical axis (18) are arranged spaced apart from one another perpendicularly to the axial direction,
with an image processing device (26), which is in signal transmission connection with the image sensors (10, 20) and is designed and programmed in such a way that a superimposed image, in which the second image is superimposed on the first image, is displayed on a display device (28),
wherein the control device (24) is in data transmission connection with the image processing device (26) in such a way that at least one focus position signal, which represents the focus position of at least one optical system (6, 16), is fed to the image processing device (26),
wherein the image processing device (26) is designed and programmed in such a way that the image superimposition of the second image with the first image is influenced as a function of the focus position signal in order to carry out a parallax compensation,
**characterized in that**
the device (2) has at least one temperature measuring device (32), which is assigned to at least one optical system (6, 16) and is in data transmission connection with the image processing device (26), wherein the image processing device (26) is in data transmission connection with a memory (30), in which a conversion table is stored, in which the respective temperature of at least one optical system (6, 16) is converted into an associated value of the parallax in order to determine a temperature-dependent parallax profile, or the image processing device (26) is designed and programmed in such a way that the measured temperature is converted into an associated value of the parallax in accordance with a predetermined algorithm, wherein the image processing device (26) is designed and programmed in such a way that the image superimposition is influenced as a function of the value of the parallax associated with the respective temperature in order to carry out a parallax compensation.

2. Targeting and/or observation device according to claim 1, **characterized in that** the first channel (4) is designed for capturing radiation in the visible wavelength range and the second optical channel (14) is designed for capturing infrared radiation in such a way that a thermal image generated by the second channel (14) is superimposed on a natural image generated by the first channel (4).

3. Targeting and/or observation device according to claim 1 or 2, **characterized in that** the image processing device (26) is designed and programmed for superimposing a target mark in the superimposed image.

4. Targeting and/or observation device according to one of the preceding claims, **characterized in that** the image processing device (26) is designed and programmed in such a way that it is determined whether the target mark is located above a focused object, wherein the image processing device (26) preferably changes at least one feature of the target mark as a function of the result of the determination.

5. Targeting and/or observation device according to one of the preceding claims, **characterized in that** the control device (24) is designed and programmed in such a way that the focusing of the second optical system (16) is tracked to a focusing of the first optical system (6).

6. Targeting and/or observation device according to one of the preceding claims, **characterized in that** the display device (28) comprises an eyepiece.

7. Targeting and/or observation device according to one of the preceding claims, **characterized in that** the targeting and/or observation device is designed to be binocular.

8. Targeting and/or observation device according to one of the preceding claims, **characterized in that** the first optical system (6) comprises a first focusing device (12) and the second optical system (16) comprises a second focusing device (22).

9. Targeting and/or observation device according to one of the preceding claims, wherein the targeting and/or observation device (2) is designed as a reflex sight.

## Revendications

1. Dispositif de visée et/ou d'observation (2) avec superposition d'images,
avec un premier canal (4), qui comprend une première optique (6), qui définit un premier axe optique (8), et un premier capteur d'image (10) pour la détection d'une première image,
avec un deuxième canal (14), qui comprend une deuxième optique (16), qui définit un deuxième axe optique (18), et un deuxième capteur d'image (20) pour la détection d'une deuxième image,
dans lequel au moins une optique (6 ou 16) présente un dispositif de focalisation motorisé (12 ou 22),
avec un dispositif de commande (24) pour la commande du dispositif de focalisation motorisé (12 ou 22),
dans lequel le premier axe optique (8) et le deuxième axe optique (18) sont disposés à distance l'un de l'autre perpendiculairement à la direction axiale,
avec un dispositif de traitement d'image (26), qui est en liaison de transmission de signal avec les capteurs d'image (10, 20) et qui est réalisé et programmé de telle sorte qu'une image de superposition, dans laquelle la deuxième image est superposée à la première image, est affichée sur un dispositif d'affichage (28),
dans lequel le dispositif de commande (24) est en liaison de transmission de données avec le dispositif de traitement d'image (26) de telle sorte qu'au moins un signal de position focale, qui représente la position focale d'au moins une optique (6, 16), est acheminé au dispositif de traitement d'image (26),
dans lequel le dispositif de traitement d'image (26) est réalisé et programmé de telle sorte que la superposition d'images de la deuxième image avec la première image est influencée en fonction du signal de position focale pour effectuer une compensation de parallaxe,
**caractérisé en ce que**
le dispositif (2) présente au moins un dispositif de mesure de température (32), qui est associé à au moins une optique (6, 16) et qui est en liaison de transmission de données avec le dispositif de traitement d'image (26), dans lequel le dispositif de traitement d'image (26) est en liaison de transmission de données avec une mémoire (30), dans laquelle est stockée une table de conversion, dans laquelle, pour déterminer une évolution de parallaxe dépendant de la température, la température respective d'au moins une optique (6, 16) est convertie en une valeur associée de la parallaxe ou le dispositif de traitement d'image (26) est réalisé et programmé de telle sorte que la température mesurée est convertie selon un algorithme prédéfini en une valeur associée de la parallaxe, dans lequel le dispositif de traitement d'image (26) est réalisé et programmé de telle sorte que la superposition d'images est influencée pour effectuer une compensation de parallaxe en fonction de la valeur de la parallaxe associée à la température respective.

2. Dispositif de visée et/ou d'observation selon la revendication 1, **caractérisé en ce que** le premier canal (4) est réalisé pour la détection d'un rayonnement dans la plage de longueurs d'onde visibles et le deuxième canal optique (14) est réalisé pour la détection d'un rayonnement infrarouge, de telle sorte qu'une image thermique générée par le deuxième canal (14) est superposée à une image naturelle générée par le premier canal (4).

3. Dispositif de visée et/ou d'observation selon la revendication 1 ou 2, **caractérisé en ce que** le dispositif de traitement d'image (26) est réalisé et programmé pour la superposition d'une marque cible dans l'image de superposition.

4. Dispositif de visée et/ou d'observation selon l'une quelconque des revendications précédentes, **caractérisé en ce que** le dispositif de traitement d'image (26) est réalisé et programmé de telle sorte qu'il est déterminé si la marque cible se trouve au-dessus d'un objet focalisé, dans lequel le dispositif de traitement d'image (26) modifie de préférence au moins une caractéristique de la marque cible en fonction du résultat de la détermination.

5. Dispositif de visée et/ou d'observation selon l'une quelconque des revendications précédentes, **caractérisé en ce que** le dispositif de commande (24) est réalisé et programmé de telle sorte que la focalisation de la deuxième optique (16) est asservie à une focalisation de la première optique (6).

6. Dispositif de visée et/ou d'observation selon l'une quelconque des revendications précédentes, **caractérisé en ce que** le dispositif d'affichage (28) comprend un oculaire.

7. Dispositif de visée et/ou d'observation selon l'une quelconque des revendications précédentes, **caractérisé en ce que** le dispositif de visée et/ou d'observation est réalisé de manière binoculaire.

8. Dispositif de visée et/ou d'observation selon l'une quelconque des revendications précédentes, **caractérisé en ce que** la première optique (6) comprend un premier dispositif de focalisation (12) et la deuxième optique (16) comprend un deuxième dispositif de focalisation (22).

9. Dispositif de visée et/ou d'observation selon l'une quelconque des revendications précédentes, dans lequel le dispositif de visée et/ou d'observation (2) est réalisé sous forme de viseur reflex.
